Europäisches Patentamt

(19) European Patent Office

Office européen des brevets

(11) Numéro de publication: **0 320 345**
A1

# (12) DEMANDE DE BREVET EUROPEEN

(21) Numéro de dépôt: **88403043.8**

(22) Date de dépôt: **02.12.88**

(51) Int. Cl.4: **C 01 G 25/02**
**C 04 B 35/48**

(30) Priorité: **11.12.87 FR 8716549**

(43) Date de publication de la demande:
**14.06.89 Bulletin 89/24**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Baumard, Jean-François**
**12, rue Monge**
**F-87000 Limoges (FR)**

**Dubois, Betrand**
**1, allée des Sycomores**
**F-45100 Orleans (FR)**

**Odier, Philippe**
**17, rue du Désert**
**F-45560 Saint Denis en Val (FR)**

(74) Mandataire: **Dubruc, Philippe et al**
**RHONE-POULENC INTERSERVICES Service Brevets**
**Chimie 25, quai Paul-Doumer**
**F-92408 Courbevoie Cédex (FR)**

(54) Zircone stabilisée, son procédé de préparation et son application dans des compositions céramiques.

(57) L'invention a trait à de nouvelles poudres fines et homogènes de zircone stabilisée.

Elles sont préparées selon un procédé du type comprenant d'une poudre fine de zircone stabilisée, du type comprenant le traitement thermique d'un aérosol contenant un précurseur de ladite zircone stabilisée, et caractérisé en ce que d'une part ledit précurseur est un mélange, dans un solvant, d'au moins un sel inorganique de zirconium et d'au moins un sel inorganique du composé stabilisant, et en ce que d'autre part le traitement thermique de l'aérosol comprend au moins :
- un chauffage à une température comprise entre 400° et 500°C, pendant un temps compris entre 4 secondes et deux heures,
- et une calcination à une température comprise entre 650° et 1250°C

EP 0 320 345 A1

**Description**

## ZIRCONE STABILISEE, SON PROCEDE DE PREPARATION ET SON APPLICATION DANS DES COMPOSITIONS CERAMIQUES

La présente invention a trait à de nouvelle poudres fines de zircone stabilisée.

Elle concerne également un procédé de préparation de ces poudres.

Elle concerne enfin, à titre d'application, leur utilisation dans la fabrication de compositions céramiques pour l'obtention de hautes propriétés mécaniques, thermo-mécaniques et électriques.

Les zircones stabilisées, et en particulier les zircones stabilisées à l'yttrium, au magnésium, au calcium ou au cérium, sont des matériaux très utilisés dans la préparation de compositions céramiques.

On sait que l'obtention de compositions céramiques denses de haute pureté présentant une bonne homogénéité tant au niveau de leur composition chimique qu'au niveau de leur microstructure passe généralement d'abord par l'obtention de poudres à la fois très fines, donc très réactives, et très homogènes chimiquement. Toutefois, l'obtention de poudres trop fines peut poser des problèmes au niveau de leur mise en forme.

Parmi plusieurs procédés actuellement existants et tendant à la préparation de telles poudres, l'un des plus intéressants consiste à traiter thermiquement de fines gouttelettes obtenues par pulvérisation (ou atomisation) d'une solution de précurseurs du produit désiré.

Ainsi, on connait par un article paru dans l'AMERICAN CERAMIC SOCIETY BULLETIN (vol. 65, n° 10, 1986, pages 1399-1404), un procédé de préparation de poudre de zircone yttriée par traitement thermique de fines gouttelettes composées d'un mélange d'alkoxydes de zirconium et d'yttrium en solution dans un solvant organique (plus précisemment un mélange de n-butoxyde de zirconium et d'isopropoxyde d'yttrium en solution dans de l'éthanol anhydre), la fine dispersion de gouttelettes étant obtenue au moyen d'un atomiseur à générateur ultrasonique.

Cependant, un tel procédé présente plusieurs inconvénients, tant au niveau de sa mise en oeuvre qu'au niveau des poudres obtenues.

Il nécessite tout d'abord d'utiliser des composés alkoxylés ; ces composés sont couteux et peu répendus dans le commerce.

D'autre part, il nécessite l'emploi de solvants organiques couteux, parfois dangereux, qui sont perdus lors de l'étape de séchage, ce qui rend le procédé particulièrement peu économique.

Enfin, les poudres obtenues par ce procédé présentent des aptitudes à la mise en forme et au frittage qui peuvent paraître insuffisantes, notamment en ce qui concerne les densités à cru et les densités finales après frittage, ce qui dénote en conséquence une qualité chimique et/ou morphologique insuffisante au niveau des poudres elles-mêmes.

L'un des buts visés par la présente invention est donc de proposer une poudre de zircone stabilisée très fine présentant une excellente aptitude au frittage, tant en ce qui concerne les densités à cru susceptibles d'être obtenues après mise en forme qu'en ce qui concerne les densités finales mesurées après frittage et l'homogénéité granulométrique du fritté.

Un autre but visé par la présente invention est de fournir un procédé de fabrication qui d'une part permet d'obtenir une telle poudre de zircone stabilisée, et qui d'autre part ne nécessite la mise en oeuvre ni de précurseurs organiques de ladite zircone stabilisée ni de solvants organiques, et qui donc obvie aux inconvénients inhérents à une telle mise en oeuvre.

Ces objectifs sont atteints selon l'invention au moyen d'un procédé de préparation de fines particules de zircone stabilisée par traitement thermique d'un aérosol contenant un précurseur de ladite zircone stabilisée, procédé caractérisé en ce que ledit précurseur est un mélange, dans un solvant, d'au moins un sel inorganique de zirconium et d'au moins un sel inorganique du composé stabilisant, et en ce que le traitement thermique de l'aérosol comprend au moins :

- un chauffage à une température comprise entre 400° et 500°C pendant un temps compris entre 4 secondes et deux heures,
- et une calcination à une température comprise entre 650° et 1250°C

Le procédé selon l'invention, outre le fait qu'il permet de s'affranchir d'utiliser des précurseurs et des solvants organiques, a également permis à la Demanderesse d'obtenir avec une excellente reproductibilité une poudre très fine de zircone stabilisée, uniformément homogène chimiquement et morphologiquement, et présentant des aptitudes au frittage tout à fait remarquables, ce qui la rend ainsi particulièrement adaptée à la fabrication de produits céramiques à hautes performances.

Mais d'autres caractéristiques et avantages de l'invention seront mieux compris à la lecture de la description qui va suivre et d'exemples concrets, mais non limitatifs, relatifs à la mise en oeuvre du procédé et des poudres obtenues par ce procédé.

La solution précurseur de la zircone stabilisée consiste donc en une solution, de préférence aqueuse, comprenant au moins un sel inorganique de zirconium et au moins un sel inorganique de composé stabilisant.

Si nécessaire, des composés chimiques peuvent être additionnés à la solution aqueuse dans le but d'aider à la solubilisation des précurseurs.

Eventuellement, il pourrait être utilisé un autre solvant que l'eau, comme par exemple un alcool, à la condition bien entendu que lesdits sels soient solubles dans ce solvant.

2

Le sel inorganique de zirconium peut être choisi notamment parmi les nitrates, les sulfates, les halogénures, et plus particulièrement les chlorures, de zirconium ou de zirconyle.

De préférence, on utilisera un chlorure de zirconyle.

Le composé stabilisant de la zircone est choisi de préférence parmi le groupe constitué par : l'yttrium, le calcium, le magnésium et le cérium. Selon un mode encore plus préférentiel de mise en oeuvre de l'invention, le composé stabilisant sera l'yttrium.

Le sel du composé stabilisant peut être un halogénure, un sulfate ou un nitrate. On utilise toutefois de préférence une solution de nitrate du composé stabilisant.

Pratiquement, le rapport des concentrations molaires entre le sel inorganique de zirconium et le sel inorganique du composé stabilisant contenus dans la solution aqueuse initiale est choisi de manière telle que la teneur en composé stabilisant (exprimée en oxyde) de la poudre de zircone varie de 0,001 à 30 % molaire, et de préférence de 1,5 à 10 % molaire et plus particulièrement entre 2 et 3 % lorsque le composé stabilisant est l'yttrium.

La solution aqueuse initiale, contenant les précurseurs inorganiques de la zircone stabilisée, étant obtenue, on procède à son atomisation pour constituer un aérosol. Le mot aérosol s'entend ici par tout système de fines gouttelettes en dispersion dans un gaz.

Cet aérosol peut être réalisé au moyen de tout pulvérisateur connu en soi, par exemple par une buse de pulvérisation du type pomme d'arrosoir ou autre. Toutefois, certains pulvérisateurs peuvent se révéler insuffisants pour l'obtention de gouttelettes à la fois très fines et très homogènes au niveau de la distribution des tailles.

C'est pourquoi il est avantageux selon l'invention d'utiliser certains pulvérisateurs bien spécifiques, tels que les atomiseurs pneumatiques ou les atomiseurs ultrasoniques.

Selon un mode préférentiel de réalisation de l'invention, on utilise un atomiseur ultrasonique ; ce type d'atomiseur est en effet particulièrement bien adapté pour réaliser de manière parfaitement reproductible des aérosols constitués de très fines gouttelettes sphériques homogènes en taille.

Ce type d'atomiseur est décrit notamment par R.J. LANG dans un article intitulé "Ultrasonic Atomisation of Liquids" (J. Acoust. Soc. Am., Vol 34, n⁰ 1, page 6-8, 1962).

Selon l'invention, le diamètre moyen des gouttelettes de l'aérosol peut être compris entre 0,5 micron et 6 microns, et plus préférentiellement entre 1 micron et 4,5 microns. Comme indiqué dans l'article précité, on règle la taille moyenne desdites gouttelettes en jouant indépendamment ou simultanément sur la fréquence d'excitation du nébuliseur et/ou la densité de la solution et/ou sa tension superficielle.

Les gouttelettes formées sont alors prises en charge par un gaz vecteur. Il est préférable que ce gaz soit un gaz inerte vis à vis des constituants des gouttelettes. Ce gaz peut être par exemple de l'azote. L'air convient également.

L'aérosol passe alors dans un ou plusieurs fours pour subir un traitement thermique. Il est essentiel que ce traitement thermique conserve l'homogénéité chimique et la monodispersité quasi parfaite des gouttelettes sphériques obtenues par pulvérisation. Selon l'invention, le traitement thermique se caractérise par le fait qu'il comprend au moins :
- un chauffage entre 400° et 500°, et de préférence aux environs de 450°C pendant un temps compris entre 4 secondes et 2 heures
- et une calcination à une température comprise entre 650° et 1250°C, et de préférence comprise entre 650° et 1000°C.

La durée de la calcination peut varier entre 10mn et 5h par exemple, et de préférence entre 1 h et 2 h.

Le traitement thermique peut être réalisé de manière continue ou discontinue : continue si la calcination est opérée directement sur les particules obtenues à la fin du palier de maintien en température de l'étape de chauffage ; discontinue si la calcination est opérée sur des particules qui, par exemple, ont été ramenées à température ambiante après l'étape de chauffage.

De préférence, ce traitement thermique sera réalisé sous air ou sous une atmosphère inerte telle que l'azote, mais de préférence sous air.

A la suite de ce traitement thermique spécifique, on obtient un poudre fine de zircone stabilisée, sous la forme quadratique ou cubique, constituée de particules sphériques ayant conservé la parfaite homogénéité morphologique des gouttelettes initiales.

Ces particules présentent alors une granulométrie macroscopique s'étalant de 0,1 à 3 microns environ mais centrée avec un très faible écart-type (inférieur à 0,4) sur un diamètre moyen qui, suivant la distribution initiale des tailles des gouttelettes, se situe entre 0,1 et 2 microns et de préférence entre 0,2 et 1,8 microns.

Ces particules sont constituées de cristallites élémentaires de taille comprise entre 100 et 500 Å environ, de préférence entre 100 et 150 Å.

D'autre part, la poudre présente une porosité comprise entre 0,11 et 0,14 $cm^3/g$, dont une microporosité de l'ordre de 30% qui peut être efficacement éliminée par un traitement thermique entre 900 et 1200°C, ce qui signifie que les particules obtenues sont alors extrêmement denses.

La surface spécifique de la poudre, mesurée par la méthode BET, est comprise entre 2 et 30 $m^2/g$ selon le traitement thermique.

Les poudres de zircone stabilisée selon la présente invention peuvent également être caractérisées par des propriétés tout à fait remarquables et surprenantes vis à vis de leur aptitude au frittage.

Il est en effet possible, avec des poudres pourtant submicroniques, d'obtenir des densités à cru extrêmement élevées qui se traduisent dans les faits par une très haute réactivité et un très faible retrait au niveau du frittage. L'excellente aptitude à la compaction de ces poudres pourrait s'expliquer notamment par le caractère monodispersé parfait des sphères constituant lesdites poudres.

Pratiquement, on peut mettre en forme sous pressage (200-480 MPa) une poudre de zircone stabilisée selon l'invention jusqu'à obtenir un produit présentant une densité à cru comprise entre 45 et 61 % de la densité théorique de la zircone désirée, puis opérer un frittage isotherme sans charge à une température généralement comprise entre 1250 et 1450°C, et plus particulièrement égale à 1300°C, pendant un temps compris entre 2 h et 5 h, et plus particulièrement égal à 3 heures, de manière à obtenir ou égale à 99 % de la densité théorique de la zircone désirée.

Les pièces frittées obtenues présentent par ailleurs une microstructure remarquablement homogène et régulière et qui le reste jusqu'à une température d'au moins 1600°C.

On observe par ailleurs que la taille des grains du produit fritté correspond sensiblement à celle des particules constituant la poudre de départ.

Les poudres de zircone stabilisée selon l'invention sont utilisables pour obtenir de bonnes propriétés mécaniques, thermomécaniques ou électriques des céramiques et notamment dans la fabrication des supports et creusets utilisés à haute température, dans les sondes à oxygène, dans les pièces d'usure ou d'adiabatisation des moteurs ou des outils selon des procédés et dans des formulations connues dans ces domaines, etc...

Des exemples concrèts illustrant l'invention vont maintenant être donnés.

## I/ MODE OPERATOIRE

On prépare un mélange aqueux d'oxychlorure de zirconium et de nitrate d'yttrium. Les quantités introduites de sels sont telles qu'elles correspondent à l'obtention d'une zircone stabilisée dont la teneur en yttrium, exprimée en $Y_2O_3$, soit de 3 % molaire.

Cinq mélanges aqueux ont été préparés, en faisant varier la concentration initiale de zirconium (exprimée en $ZrO_2$) :

échantillon A : 0,02 mole/l
échantillon B : 0,04 mole/l
échantillon C : 0,02 mole/l
échantillon D : 0,08 mole/l
échantillon E : 0,67 mole/l

Le mélange est alors pulvérisé au moyen d'un atomiseur ultrasonique dont les fréquences d'excitation ont été réglées pour donner soit des gouttelettes d'un diamètre moyen de 2,2 μm environ (pour les échantillons A et B), soit des gouttelettes d'un diamère moyen de 4,5 μm environ (pour les échantillons C, D et E).

Les fines gouttelettes de l'aérosol sont alors véhiculées pneumati quement par de l'air (débit : 50-300 l/h) puis séchées et calcinées dans un ou plusieurs fours selon les essais.

## II/ RESULTATS

### A/ Essais 1

Les échantillons A, B, C, D et E sont traités selon le mode opératoire décrit ci-dessus, mais en subissant un traitement thermique non conforme à l'invention, c'est à dire une montée directe en température jusqu'à 700°C.

On constate alors que les particules obtenues sont creuses et fracturées, donc impropres à un bon frittage.

### B/ Essais 2

Les échantillons A, B, C, D et E toujours traités selon le même mode opératoire, subissent cette fois un traitement thermique conforme à l'invention:
- montée en température jusqu'à 450°C et maintient pendant une heure à cette température
- puis, montée en température soit jusqu'à 650°C pour les échantillons A et B, soit jusqu'a 700°C pour les échantillons C, D et E avec un maintien de 2 heures à cette température dans les deux cas.

Les caractéristiques des poudres obtenues sont les suivantes :

### a) Morphologie

L'analyse granulométrique des poudres, consignée dans le tableau I ci-dessous, fait apparaitre une distribution très homogène et quasiment monodisperse de la taille des particules.

TABLEAU I

| ECHANTILLON | DOMAINE DES DIAMETRES (μM) | DIAMETRE MOYEN (μm) | ECART TYPE | ECART TYPE STANDART |
|---|---|---|---|---|
| A | 0,1 - 0,8 | 0,2 | 0,06 | 1,27 |
| B | 0,15- 1,0 | 0,3 | 0,11 | 1,35 |
| C | 0,1 - 1,2 | 0,5 | 0,15 | 1,31 |
| D | 0,1 - 1,7 | 0,8 | 0,21 | 1,26 |
| E | 0,2 - 3,5 | 1,8 | 0,4 | 1,24 |

L'analyse par microscopie électronique et par diffraction X montre que ces particules se présentent sous la forme de sphère quasiment parfaites, ce qui démontre que le traitement thermique selon l'invention conserve l'homogénéité morphologique des gouttelettes initiales. Cette même analyse révèle également que chaque particule de la poudre est constituée d'un agglomérat de fins cristallites dont la taille varie entre 100 et 140 Å selon les échantillons :

échantillon A : 125 Å
échantillon B : 130 Å
échantillon C : 133 Å
échantillon D : 114 Å
échantillon E : 117 Å

L'analyse montre d'autre part que les poudres se présentent sous une forme quadratique.

L'étude de la texture interne des particules sphériques (réalisée sur un poli) met enfin en évidence le caractère très dense de ces dernières.

b) aptitude à la compaction

Quatre poudres, issues respectivement des échantillons A, B, D et E, ont été compactées par pressage isostatique sous 4,8 t/cm$^2$ (480 MPa). L'analyse de la microstructure des comprimés montre que les particules ne sont pas écrasées lors de la mise en forme. Le tableau II ci-dessous regroupe les valeurs des densités en cru obtenues et les résultats des mesures porosimétriques (porosimètre au mercure ) pour les échantillons D et E :

TABLEAU II

| Echantillon | A | B | D | E |
|---|---|---|---|---|
| Densité apparente | 3,29 | 3,34 | 3,35 | 3,28 |
| Compacité | 0,54 | 0,55 | 0,55 | 0,54 |
| Taille des pores (nm) . interagglomérats . intraagglomérats | - | - | 130 8 | 270 8 |
| Volume poreux cumulé (cm$^3$/g) | - | - | 0,12 | 0,14 |
| Surface spécifique calculée (m$^2$.g) | - | - | 30 | 20 |

Pour les deux échantillons D et E, on constate une distribution bi-modale des pores autour de quelques centaines de nanomètres et 8 nanomètres. A partir des distributions de porosité, on peut estimer la porosité intraagglomérat à 30 %.

Cette microporosité peut être éliminée efficacement par un traitement thermique au dessus de 700°C pour provoquer le frittage des sphères sur elle-mêmes.

c) Aptitude au frittage

1 - analyse dilatométrique

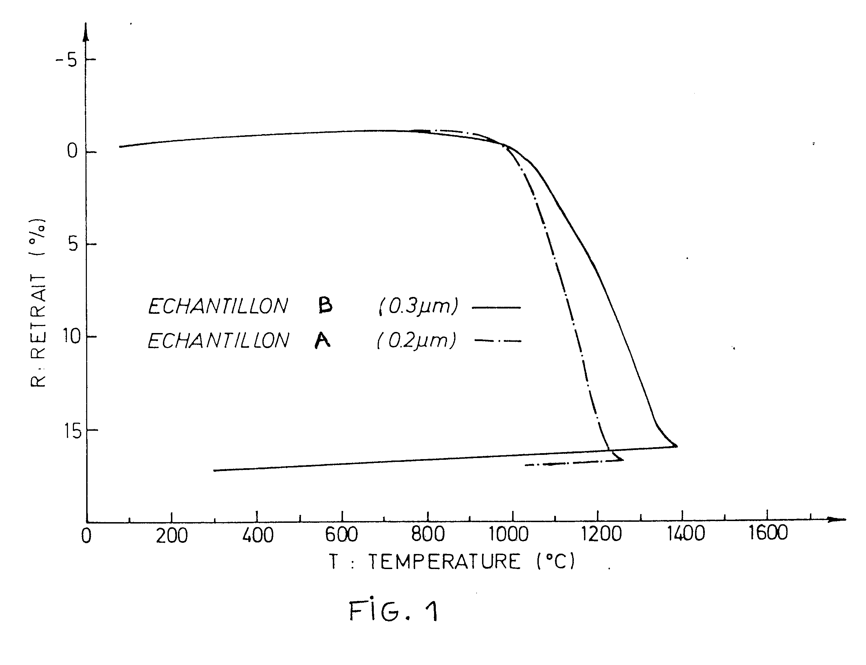

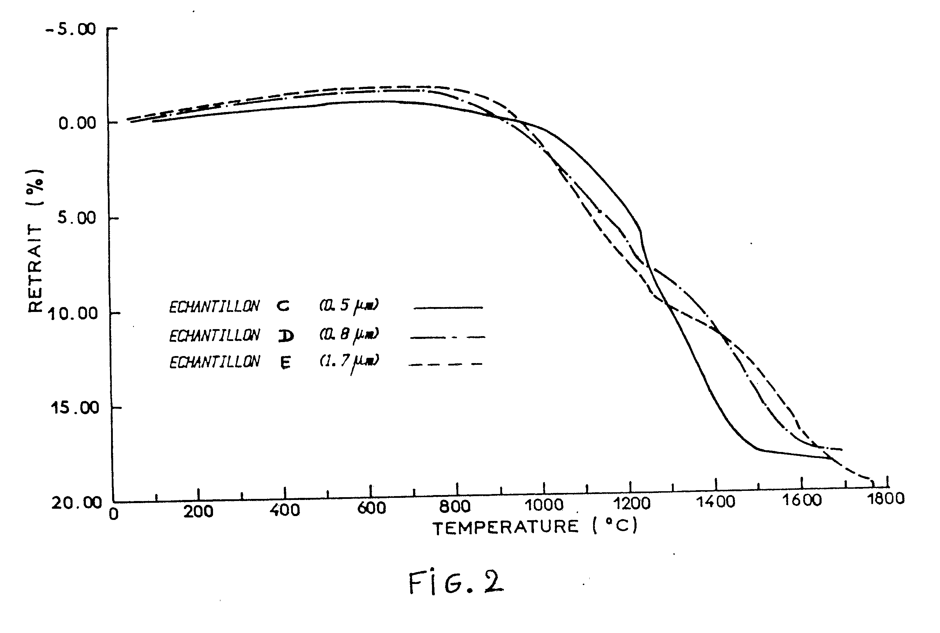

L'étude de l'aptitude au frittage des cinq poudres issues des échantillons A, B, C, D et E a été abordée dans un premier temps par une analyse dynamique réalisée à l'aide d'un dilatomère vertical haut température. La vitesse de montée en température est de 250° C/h pour les échantillons A et B ; elle est de 170°C/h pour les échantillons C, D et E. Les courbes de dilatométrie sont reportées aux figures 1 et 2.

Les trois échantillons C, D et E commencent à densifier lentement vers 900°C. La cinétique de densification s'accélère au delà de 1200°C, et ceci d'autant plus que les grains sont plus fins.

La poudre à 0,5 μm (échantillon C) présente un maximum de vitesse de frittage bien marqué vers 1400°C. La dernière partie des courbes montre qu'il n'y a aucune dédensification même à très hautes températures.

Les deux échantillons A et B commencent à fritter lentement vers 900°C. La cinétique de densification s'accélère au delà de 1100°C et ceci d'autant plus que les grains sont plus fins. La poudre à 0,2 μm (échantillon A) présente une température de fin de frittage de 1260°C.

Il apparait donc clairement que la température de fin de frittage, en régime dynamique, peut être abaissée par la réduction de la taille des particules : plus de 300°C peuvent être gagnés par une diminution de 1,8 μm à 0,5 μm de la taille des grains ; plus de 500°C peuvent être gagnés si cette diminution descend jusqu'à 0,2 μm.

D'autre part, les microstructures des produits frittés sont extrêmement uniformes . La taille moyenne des grains des échantillons frittés A, B, D et E et leurs densités (mesurée par la méthode d'Archimède) sont données dans le tableau III ci-dessous.

TABLEAU III

| Echantillon | A | B | D | E |
|---|---|---|---|---|
| Taille des grains (μm) | 0,18 | 0,25 | 0,6 | 1,5 |
| Densité (g/cm$^3$) | 6,05 | 6,06 | 6,07 | 6,06 |

On constate que la taille des grains des frittés correspond remarquablement bien à celle des particules constituant la poudre, et aucun grossissement de leur taille n'est observable jusque vers 1600°C.

2. Frittage isotherme

a- On effectue un frittage isotherme de la poudre 0,2 μm (échantillon A) à une température de 1300°C pendant 3 heures. La densité en cru du compact (sous 200 MPa) est de 2,79 (soit plus de 46 % de la densité théorique). La densité de l'échantillon fritté dans l'air est de 6,02, soit 99 % de la densité théorique. La taille moyenne des grains du fritté est de 0,18 μm.

b - On effectue un frittage isotherme de la poudre 0,3 μm (échantillon B) à une température de 1300°C pendant 3 heures. La densité en cru du compact (sous 480 MPa) est de 3,35 (soit 55,3 % de la densité théorique). La densité de l'échantillon fritté dans l'air est de 6,02, soit 99 % de la densité théorique. La taille moyenne des grains du fritté est de 0,22 μm.

c- On effectue un frittage isotherme de la poudre 0,8 μm (échantillon D) à une température de 1450°C pendant 3 heures. La densité en cru du compact (sous 480 MPa) est de 3,27 (soit 54 % de la densité théorique). La densité de l'échantillon fritté dans l'air est de 6,02, soit 99 % de la densité théorique. La taille moyenne des grains du fritté est de 0,6 μm.

**Revendications**

1. Procédé de préparation d'une poudre fine de zircone stabilisée, du type comprenant le traitement thermique d'un aérosol contenant un précurseur de ladite zircone stabilisée, et caractérisé en ce que d'une part ledit précurseur est un mélange, dans un solvant, d'au moins un sel inorganique de zirconium et d'au moins un sel inorganique du composé stabilisant, et en ce que d'autre part le traitement thermique de l'aérosol comprend au moins :
- un chauffage à une température comprise entre 400° et 500°C, pendant un temps compris entre 4 secondes et deux heures,
- et une calcination à une température comprise entre 650° et 1250°C.

2. Procédé selon la revendication 1 caractérisé en ce que ledit solvant est de l'eau.

3. Procédé selon l'une quelconque des revendications précédentes caractérisé en ce que ledit sel inorganique de zirconium est choisi parmi les nitrates, les sulfates et les halogénures de zirconium ou de zirconyle.

4. Procédé selon la revendication 3 caractérisé en ce que l'on utilise un chlorure de zirconium ou de zirconyle.

5. Procédé selon la revendication 4 caractérisé en ce que l'on utilise un chlorure de zirconyle.

6. Procédé selon l'une quelconque des revendications précédentes caractérisé en ce que ledit sel du composé stabilisant est choisi parmi un halogénure, un sulfate ou un nitrate.

7. Procédé selon la revendication 6 caractérisé en ce que le composé stabilisant est choisi parmi l'yttrium, le cérium, le calcium et le magnésium.

8. Procédé selon la revendication 7 caractérisé en ce que l'on utilise du nitrate d'yttrium.

9. Procédé selon l'une quelconque des revendications précédentes caractérisé en ce que l'on introduit dans ledit mélange de l'yttrium et du zirconium en quantités telles que la teneur en yttrium, exprimée en $Y_2O_3$, dans la poudre finale de zircone stabilisée soit comprise entre 2 et 3 % molaire.

10. Procédé selon l'une quelconque des revendications précédentes caractérisé en ce que ledit aérosol est obtenu par atomisation ultrasonique.

11. Procédé selon l'une quelconque des revendications précédentes caractérisé en ce que ledit chauffage et ladite calcination sont réalisés sous air.

12. Procédé selon l'une quelconque des revendications précédentes caractérisé en ce que ladite température de chauffage se situe aux environs de 450°C.

13. Procédé selon l'une quelconque des revendications précédentes caractérisé en ce que ladite température de calcination est comprise entre 650° et 1000°C.

14. Procédé selon la revendication 13 caractérisé en ce que ladite température est maintenue pendant un temps compris entre 1 et 2 heures.

15. Poudre fine de zircone stabilisée caractérisée en ce qu'elle est constituée de particules sphériques dont la taille est centrée sur un diamètre moyen compris entre 0,2 et 1,8 μm avec un écart-type inférieur ou égal à 0,4.

16. Poudre selon la revendication 15 caractérisé en ce que lesdites particules sont constituées de cristallites élémentaires de taille moyenne comprise entre 100 et 500 Å.

17. Poudre selon l'une des revendications 15 et 16 caractérisée en ce que, après frittage, elles permettent d'aboutir à une zircone stabilisée dont la densité est supérieure ou égale à 99 % de sa densité théorique.

FIG. 1

EP 0 320 345 A1

FIG. 2

EP 0 320 345 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN Vol. 11, no. 206 (C-433)(2653), 3 juillet 1987; & JP - A - 62 30605 (NIPPON MINING CO LTD) 09-02-1987 --- | | C 01 G 25/02 C 04 B 35/48 |
| D,A | BULLETIN OF THE AMERICAN CERAMIC SOCIETY Vol. 65, no. 10, octobre 1986, pages 1399-1404, Columbus, Ohio,US; H. ISHIZAWA et al.:"Homogeneous Y2O3-stabilized ZrO2 powder by spray pyrolysis method" * page 1399 * --- | 1 | |
| A | FR-A-1 571 187 (W.R. GRACE & CO) * Revendications * --- | | |
| A | EP-A-0 194 191 (RHONE-POULENC SPECIALITES CHIMIQUES) * Revendications * ----- | | |

| | DOMAINES TECHNIQUES RECHERCHES (Int. Cl.4) |
|---|---|
| | C 01 G 25/02 C 04 B 35/48 |

Le présent rapport a été établi pour toutes les revendications

| Lieu de la recherche | Date d'achèvement de la recherche | Examinateur |
|---|---|---|
| BERLIN | 20-02-1989 | STROUD J.G. |